# EUROPÄISCHE PATENTSCHRIFT

(11) **EP 4 155 687 B1**
(45) Veröffentlichungstag und Bekanntmachung des Hinweises auf die Patenterteilung: **27.03.2024**
(21) Anmeldenummer: 22180754.8
(22) Anmeldetag: 23.06.2022
(51) Int. Cl.: G01F 1/58, G01F 1/64, G01F 1/74, G01N 27/08

(54) **MESSSYSTEM UND VERFAHREN ZUM BETREIBEN EINES MESSSYSTEMS**
MEASURING SYSTEM AND METHOD FOR OPERATING SAME
SYSTÈME DE MESURE ET PROCÉDÉ PERMETTANT DE FAIRE FONCTIONNER UN SYSTÈME DE MESURE

(30) Priorität: 27.09.2021 DE 102021124962
(43) Veröffentlichungstag der Anmeldung: 29.03.2023
(73) Patentinhaber: Krohne Messtechnik GmbH, 47058 Duisburg (DE)
(72) Erfinder: Förster, Herr Jan, 45149 Essen (DE)
(74) Vertreter: Gesthuysen Patentanwälte

(56) Entgegenhaltungen:
- US-A- 3 902 366
- US-A- 4 679 442
- US-A1- 2017 261 357
- US-A1- 2018 245 956
- XIANG DENG ET AL: "Theoretical study of vertical slug flow measurement by data fusion from electromagnetic flowmeter and electrical resistance tomography", FLOW MEASUREMENT AND INSTRUMENTATION, BUTTERWORTH-HEINEMANN, OXFORD, GB, Bd. 22, Nr. 4, 15. März 2011 (2011-03-15), Seiten 272-278, XP028224069, ISSN: 0955-5986, DOI: 10.1016/J.FLOWMEASINST.2011.03.007 [gefunden am 2011-03-23]

## Beschreibung

Die Erfindung betrifft zum einen ein Messsystem mit einem Messrohr, einem Liner, einem Eigenschaftsmessgerät und einem Durchflussmessgerät.

Das Messrohr weist entlang einer Messrohrlängsachse einen Messrohrinnenraum auf. Der Messrohrinnenraum ist mit dem Liner ausgekleidet. Der Liner isoliert das Messrohr von einem Medium im Messrohrinnenraum elektrisch und schützt das Messrohr vor Verschleiß durch das Medium.

Das Eigenschaftsmessgerät weist eine Eigenschaftsmesssteuerung und mindestens drei Eigenschaftsmesselektroden auf. Die mindestens drei Eigenschaftsmesselektroden sind in einem ersten Bereich des Messrohrinnenraums am Messrohr angeordnet.

Die Eigenschaftsmesssteuerung ist ausgebildet, zunächst eine Anzahl von Impedanzmessungen mit den mindestens drei Eigenschaftsmesselektroden am Medium im ersten Bereich über eine Impedanzmessdauer auszuführen und dann aus den Impedanzmessungen unter Verwendung von Impedanztomografie mindestens eine Eigenschaft des Mediums zu bestimmen.

Das Durchflussmessgerät weist eine Durchflussmesssteuerung, eine Magnetfelderzeugungsvorrichtung und mindestens zwei Durchflussmesselektroden auf. Die Magnetfelderzeugungsvorrichtung und die mindestens zwei Durchflussmesselektroden sind in einem vom ersten Bereich verschiedenen zweiten Bereich des Messrohrinnenraums am Messrohr angeordnet.

Die Durchflussmesssteuerung ist ausgebildet, mit der Magnetfelderzeugungsvorrichtung ein Magnetfeld im Medium im zweiten Bereich zu erzeugen, eine Anzahl von Spannungsmessungen mit einer Abtastrate mit den mindestens zwei Durchflussmesselektroden am Medium im zweiten Bereich auszuführen und aus den Spannungsmessungen einen Durchfluss des Mediums zu bestimmen.

Weiter betrifft die Erfindung auch ein Verfahren zum Betreiben eines Messsystems.

Das Messsystem weist ein Messrohr, einen Liner, ein Eigenschaftsmessgerät und ein Durchflussmessgerät auf.

Das Messrohr weist entlang einer Messrohrlängsachse einen Messrohrinnenraum auf. Der Messrohrinnenraum ist mit dem Liner ausgekleidet. Der Liner isoliert das Messrohr von einem Medium im Messrohrinnenraum elektrisch und schützt das Messrohr vor Verschleiß durch das Medium.

Das Eigenschaftsmessgerät weist eine Eigenschaftsmesssteuerung und mindestens drei Eigenschaftsmesselektroden auf. Die mindestens drei Eigenschaftsmesselektroden sind in einem ersten Bereich des Messrohrinnenraums am Messrohr angeordnet.

Das Durchflussmessgerät weist eine Durchflussmesssteuerung, eine Magnetfelderzeugungsvorrichtung und mindestens zwei Durchflussmesselektroden auf. Die Magnetfelderzeugungsvorrichtung und die mindestens zwei Durchflussmesselektroden sind in einem vom ersten Bereich verschiedenen zweiten Bereich des Messrohrinnenraums am Messrohr angeordnet.

Im Betrieb des Messsystems wird von der Eigenschaftsmesssteuerung zunächst eine Anzahl von Impedanzmessungen mit den mindestens drei Eigenschaftsmesselektroden am Medium im ersten Bereich über eine Impedanzmessdauer ausgeführt und dann wird aus den Impedanzmessungen unter Verwendung von Impedanztomografie mindestens eine Eigenschaft des Mediums bestimmt.

Weiter wird im Betrieb des Messsystems von der Durchflussmesssteuerung mit der Magnetfelderzeugungsvorrichtung ein Magnetfeld im Medium im zweiten Bereich erzeugt, eine Anzahl von Spannungsmessungen mit einer Abtastrate mit den mindestens zwei Durchflussmesselektroden am Medium im zweiten Bereich ausgeführt und aus den Spannungsmessungen der Durchfluss des Mediums bestimmt.

Die mindestens drei Eigenschaftsmesselektroden sind derart am Messrohr angeordnet, dass sie zum einen elektrisch isoliert vom Messrohr sind, da dieses aus einem elektrisch leitenden Material besteht, und zum anderen in galvanischen Kontakt mit dem Medium im Messrohr treten können. Für gewöhnlich sind die mindestens drei Eigenschaftsmesselektroden ringförmig um das Messrohr angeordnet. Die mindestens zwei Durchflussmesselektroden sind derart am Messrohr angeordnet, dass sie zum einen elektrisch isoliert vom Messrohr sind und zum anderen in galvanischen Kontakt mit dem Medium im Messrohr treten können.

Die mindestens drei Eigenschaftsmesselektroden des Eigenschaftsmessgeräts sind im ersten Bereich und die Magnetfelderzeugungsvorrichtung und die von den mindestens drei Eigenschaftsmesselektroden separaten mindestens zwei Durchflussmesselektroden des Durchflussmessgeräts sind im zweiten Bereich desselben Messrohrinnenraums derart nahe beieinander angeordnet, sodass eine von der Eigenschaftsmesssteuerung ausgeführte Impedanzmessung eine gleichzeitig von der Durchflussmesssteuerung ausgeführte Spannungsmessung beeinträchtigt. Die Beeinträchtigung erfolgt durch elektrische Felder, die mit den Impedanzmessungen einhergehen. Aber auch externe elektrische Felder beeinträchtigen sowohl die Impedanz- als auch die Spannungsmessungen. Jedoch ist durch diese Anordnung das Messsystem insbesondere in Bezug auf eine Ausdehnung entlang der Messrohrlängsachse kompakter als ein konventionelles Messsystem, bei welchem die Eigenschaftsmesselektroden und die Durchflussmesselektroden entweder derart weit voneinander beabstandet sind, dass sich die Messungen nicht gegenseitig beeinflussen oder bei dem die Eigenschaftsmesselektroden und die Durchflussmesselektroden in separaten Messrohrinnenräumen angeordnet sind. Die Kompaktheit des Messsystems gegenüber diesem konventionellen Messsystem wird demnach dadurch erkauft, dass di eImpedanzmessungen die Spannungsmessungen beeinträchtigen. Ein erster und ein zweiter Messrohrinnenraum sind insbesondere dann separat voneinander, wenn jeder der Messrohrinnenräume einen separaten Liner aufweist, der das Messrohr von einem Medium im jeweiligen Messrohrinnenraum elektrisch isoliert.

Das Messsystem ist bei Verwendung in industriellen Anwendungen in ein übergeordnetes System integriert. Insbesondere sind das Messrohr, die Eigenschaftsmesssteuerung und die von der Eigenschaftsmesssteuerung separate Durchflussmesssteuerung mit dem System verbunden. Im Betrieb des Messsystems wird ein Medium von dem übergeordneten System durch das Messrohr geströmt und führen das Eigenschaftsmessgerät und das Durchflussmessgerät das aus, wofür sie wie beschrieben ausgebildet sind. Das Medium weist in vielen Anwendungen, für die das Messsystem vorgesehen ist, neben flüssigen auch feste Bestandteile auf. Somit ist das Messsystem für Medien mit festen Bestandteilen ausgebildet. Feste Bestandteile sind zum Beispiel Sand, Kies und Erze.

Das Durchflussmessgerät ist ein magnetisch-induktives Durchflussmessgerät. Ein durch den Messrohrinnenraum strömendes elektrisch leitfähiges Medium wird von dem Magnetfeld im zweiten Bereich des Messrohrinnenraums durchsetzt, wodurch eine Spannung in das strömende Medium induziert wird, welche durch die mindestens zwei Durchflussmesselektroden bei einer Spannungsmessung messbar ist. Ultraschallmessgeräte können aufgrund der möglichen festen Bestandteile des Mediums nicht eingesetzt werden. Coriolis-Messgeräte kommen aufgrund der für ihr Arbeitsprinzip erforderlichen Rohrformen und deren Anschaffungskosten nicht in Frage. Insbesondere sind Coriolis-Messgeräte größer als magnetisch-induktive Durchflussmessgeräte, wodurch die angestrebte Kompaktheit des Messsystems nicht realisierbar ist. Weiter können die Messrohrinnenräume von magnetisch-induktiven Durchflussmessgeräten im Gegensatz zu denen von Ultraschall- und Coriolis-Messgeräten mit widerstandsfähigeren Linern ausgekleidet werden.

Das Eigenschaftsmessgerät ist ein Messgerät, welches elektrische Impedanztomografie umsetzt und zur Bestimmung der mindestens einen Eigenschaft geeignet ist. Vorliegend sind Eigenschaften des Mediums gemeint, die insbesondere auch mit radiometrischen Tomografieverfahren bestimmt werden können. Bei radiometrischen Tomografieverfahren kommt jedoch radioaktive Strahlung zum Einsatz, was verschiedene Nachteile hat. So weist die Quelle der radioaktiven Strahlung ein Gefahrenpotenzial auf, ist die Entsorgung der Quelle mit hohen Kosten verbunden und müssen Bediener des Messgeräts für den Umgang mit Strahlenquellen geschult sein. Deshalb sind radiometrische Tomografieverfahren im Vergleich zu elektrischen Impedanztomografieverfahren ungeeignet.

Die Auskleidung des Messrohrinnenraums mit dem Liner bewirkt, dass insbesondere durch feste Bestandteile eines Mediums der Liner anstelle des Messrohrs verschleißt. Zwar ist der Aufwand, einen verschlissenen Liner gegen einen neuen Liner auszutauschen, geringer als ein verschlissenes Messrohr gegen ein neues Messrohr auszutauschen, jedoch muss in beiden Fällen das Messsystem aus dem übergeordneten System ausgebaut werden. Der Ausbau des Messsystems bedeutet, dass das System für die Zeit, die der Austausch des Liners beansprucht, nicht weiter betrieben werden kann. Im Vergleich zu konventionellen Messsystemen ist der Aufwand bei dem kompakten Messsystem jedoch aufgrund seiner Kompaktheit deutlich geringer.

Bei vielen industriellen Anwendungen werden ein Durchfluss und mindestens eine Eigenschaft eines Mediums benötigt, um einen Prozess zu steuern oder zu bewerten. Solche Anwendungen sind zum Beispiel eine Steuerung eines Fördervorgangs beim Abbau von Bodenschätzen und eine Steuerung eines Fördervorgangs auf einem Baggerschiff. Diese Fördervorgänge betreffen ein Fördern eines Mediums, welches für gewöhnlich neben flüssigen auch feste Bestandteile aufweist. Sie benötigen neben der Kenntnis eines Durchflusses des Mediums auch Kenntnis über Eigenschaften des Mediums, hier Kenntnis über ein Verhältnis zwischen den festen und flüssigen Bestandteilen und/oder Kenntnis über eine Größenverteilung der festen Bestandteile. Nur wenn der Durchfluss und die Eigenschaften bekannt sind, kann der Förderprozess optimal gesteuert werden. Dass heißt, die Fördergeschwindigkeit kann mit diesen Kenntnissen so eingestellt werden, dass zum einen keine Sedimentation und zum anderen kein unnötig hoher Verschleiß des Liners auftritt. Sedimentation tritt dann auf, wenn die Fördergeschwindigkeit zu gering ist oder der Anteil fester Bestandteile im Verhältnis zu den flüssigen Bestandteilen zu hoch ist. Ein unnötig hoher Verschleiß des Liners tritt dann auf, wenn die Fördergeschwindigkeit für die gegebene Größenverteilung des Feststoffs zu hoch ist. Weiter kann die Förderung so eingestellt werden, dass keine unnötig hohe Menge an flüssigen Bestandteilen im Verhältnis zu den festen Bestandteilen gefördert wird, wenn die festen die gewünschten Bestandteile und die flüssigen Bestandteile nur ein Fördermedium sind. Ein unnötig hoher Anteil an flüssigen Bestandteilen bedeutet einen schlechten Wirkungsgrad der Förderung.

US2017261357 A1 offenbart ein Verfahren und System zur Überwachung des Flusses einer Mischphasenprobe, die mindestens eine erste Phase und eine zweite Phase mit unterschiedlichen elektrischen Leitfähigkeiten umfasst, wobei die zweite Phase flüssig oder gasförmig und elektrisch nicht leitend ist und die erste Phase eine Flüssigkeit ist und mit einer höheren Leitfähigkeit als die zweite Phase, Verwenden eines Tomographiegeräts zum Erzeugen von Tomographiedaten, die mindestens ein erstes Leitfähigkeitsprofil von mindestens einem Teil eines ersten Querschnitts der Mischphasenprobe anzeigen, die durch eine Leitung fließt, und Verwenden eines Durchflussmessers, um den Fluss der ersten Phase durch die Leitung zu erfassen und ein Flusssignal zu erzeugen, das eine Flussgeschwindigkeit der ersten Phase angibt, und Berechnen, aus den Daten, eines Bruchteils des ersten Querschnitts, der von der ersten Phase eingenommen wird, und Berechnen , aus dem Bruchteil und dem Durchflusssignal, eine volumetrische Durchflussrate der ersten Phase durch die Leitung.

Weiter oben ist bereits hergeleitet worden, dass Nachteile des Messsystems und des Verfahrens sind, dass Spannungsmessungen durch Impedanzmessungen beeinträchtigt werden und dass sowohl Spannungs- als auch Impedanzmessungen durch externe elektrische Felder beeinträchtigt werden. Aufgabe der vorliegenden Erfindung ist daher die Angabe sowohl eines kompakten Messsystems als auch eines Verfahrens zum Betreiben eines kompakten Messsystems, bei dem die aufgezeigten Probleme zumindest abgemildert sind.

Die Aufgabe wird durch ein Verfahren zum Betreiben eines Messsystems mit den Merkmalen von Anspruch 1 gelöst.

Das Messsystems, welches dieses Verfahren ausführt, weist zusätzlich eine Abschirmung und eine Signalleitung auf. Die Abschirmung schirmt den Messrohrinnenraum gegen externe Störungen ab. Externe Störungen werden durch externe Felder, insbesondere elektrische Felder erzeugt. Die Durchflussmesssteuerung und die Eigenschaftsmesssteuerung sind über die Signalleitung miteinander verbunden.

Im Betrieb führt das Messsystem das folgende Verfahren aus:
Von der Eigenschaftsmesssteuerung wird zunächst die Anzahl von Impedanzmessungen mit den mindestens drei Eigenschaftsmesselektroden am Medium im ersten Bereich über die Impedanzmessdauer ausgeführt und wird währenddessen die Impedanzmessdauer durch ein Messsignal über die Signalleitung der Durchflussmesssteuerung signalisiert und wird dann aus den Impedanzmessungen unter Verwendung von Impedanztomografie die mindestens eine Eigenschaft des Mediums bestimmt. Das Messsignal ist vorzugsweise ein digitales Signal.

Von der Durchflussmesssteuerung wird mit der Magnetfelderzeugungsvorrichtung das Magnetfeld im Medium im zweiten Bereich erzeugt, wird eine Anzahl von Spannungsmessungen mit der Abtastrate mit den mindestens zwei Durchflussmesselektroden am Medium im zweiten Bereich ausgeführt, wird von der Durchflussmesssteuerung dem Messsignal die Impedanzmessdauer entnommen, werden die während der Impedanzmessungen ausgeführten Spannungsmessungen verworfen und wird aus den verbliebenen Spannungsmessungen einen Durchfluss des Mediums bestimmt.

Durch die die Abschirmung des Messrohrinnenraums sind sowohl die Impedanz- als auch die Spannungsmessungen gegenüber externen Störungen abgeschirmt. Durch das Verwerfen der Spannungsmessungen, die während der Impedanzmessungen ausgeführt werden, ist die Beeinträchtigung der Spannungsmessungen durch die Impedanzmessungen zumindest reduziert.

In einer Ausgestaltung des Verfahrens werden Widerstandsmessungen als die Impedanzmessungen ausgeführt und wird aus den Impedanzmessungen, die dann Widerstandsmessungen sind, unter Verwendung von Widerstandstomografie die mindestens eine Eigenschaft des Mediums bestimmt. Bei einer Impedanzmessung am Medium werden ein Widerstand und eine Reaktanz des Mediums bestimmt. Im Gegensatz dazu wird bei einer Widerstandsmessung lediglich ein Widerstand des Mediums bestimmt. Demnach ist der Aufwand einer Widerstandsmessung geringer als der einer Impedanzmessung. Dabei erfolgt die Bestimmung der mindestens einen Eigenschaft des Mediums unter Verwendung von Widerstandstomografie mit ausreichender Genauigkeit in Bezug auf die Bestimmung der mindestens einen Eigenschaft unter Verwendung von Impedanztomografie.

In einer Ausgestaltung ist die mindestens eine Eigenschaft des Mediums ein Anteil und/oder eine Größe von festen Bestandteilen im Medium. Weiter wird aus der Größe der festen Bestandteile z. B. dann eine Größenverteilung der festen Bestandteile bestimmt.

In einer Ausgestaltung wird von der Eigenschaftsmesssteuerung nach der Bestimmung der mindestens einen Eigenschaft des Mediums eine Dauer gewartet, bevor die nächste Anzahl von Impedanzmessungen ausgeführt wird. Die Dauer wird dabei derart bemessen, dass die nächste Anzahl von Impedanzmessungen erst dann beginnt, wenn die Spannungsmessungen abgeschlossen sind.

In einer Ausgestaltung wird nur dann aus den verbliebenen Spannungsmessungen der Durchfluss des Mediums bestimmt, wenn eine Anzahl der verbliebenen Spannungsmessungen mindestens 30, bevorzugt 40 und besonders bevorzugt 50 beträgt. Untersuchungen haben gezeigt, dass die Bestimmung des Durchflusses aus mindestens 30 Spannungsmessungen eine ausreichende Genauigkeit gewährleistet, wobei 40 oder sogar 50 Spannungsmessungen die Genauigkeit weiter erhöhen. Eine Erhöhung der Genauigkeit bei mehr als 50 Spannungsmessungen ist zwar gegeben, jedoch rechtfertigt die nur noch geringe Erhöhung der Genauigkeit nicht den Zeitbedarf für die zusätzlichen Messungen.

In einer Ausgestaltung wird aus den verbliebenen Spannungsmessungen während der Bestimmung des Durchflusses und zur Bestimmung des Durchflusses ein Mittelwert gebildet. Der Durchfluss wird demnach unter Verwendung des Mittelwerts bestimmt.

In einer Weiterbildung der vorstehenden Ausgestaltung wird das Verfahren der vorstehenden Ausgestaltung mehrfach ausgeführt, wodurch eine Anzahl von Mittelwerten generiert wird. Bei jeder Ausführung des Verfahrens wird ein Mittelwert generiert. Aus der Anzahl der Mittelwerte wird dann ein Trend bestimmt und unter Verwendung des Trends werden ggfs. vorhandene Lücken in einer zeitlichen Abfolge der Mittelwerte ausgefüllt. Eine Lücke in der zeitlichen Abfolge entsteht z. B. dadurch, dass so viele Spannungsmessungen verworfen werden, dass der Durchfluss nicht bestimmt wird. Wenn eine Lücke in der Abfolge der Mittelwerte unter Verwendung des Trends ausgefüllt ist, dann ist die Bestimmung des Durchflusses des Mediums unter Verwendung des Mittelwerts in der Lücke genauer, als wenn die Lücke nicht aufgefüllt wird.

In einer Weiterbildung der vorstehenden Weiterbildung wird der Trend aus einer Anzahl von 3 bis 7 Mittelwerten gebildet. Untersuchungen haben gezeigt, dass eine Anzahl von weniger als 3 Mittelwerten zu einer übermäßigen Beeinträchtigung der Bestimmung des Durchflusses führt und dass eine Anzahl von mehr als 7 Mittelwerten nur zu einer unwesentlichen Verbesserung der Bestimmung des Durchflusses führt in Bezug auf den dafür notwendigen Aufwand.

In einer Ausgestaltung eines Verfahrens, bei welchem ein Trend bestimmt wird, werden bei der Bestimmung des Trends Änderungen zwischen jüngeren Mittelwerten stärker als Änderungen zwischen älteren Mittelwerten gewichtet. Dabei wird ein älterer Mittelwert zeitlich vor einem jüngeren Mittelwert bestimmt. Durch diese Art der Bestimmung des Trends werden Lücken in der Abfolge der Mittelwerte genauer ausgefüllt, wodurch die Bestimmung des Durchflusses des Mediums ebenfalls genauer ist.

In einer Weiterbildung der zuvor beschriebenen Ausgestaltung wird der Trend bestimmt, indem zunächst jeweils eine Steigung zwischen zwei aufeinanderfolgenden Mittelwerten bestimmt wird, und dann eine durchschnittliche Steigung bestimmt wird, indem ein Mittelwert zunächst aus den beiden ältesten Steigungen und dann jeweils aus dem zuvor bestimmten Mittelwert und der nächst jüngeren Steigung bestimmt wird. Die Mittelwerte werden vorzugsweise als lineare Mittelwerte bestimmt.

Bei einer weiteren Ausgestaltung des Verfahrens ist die Magnetfelderzeugungsvorrichtung des Messsystems zur Erzeugung eines geschalteten Gleichmagnetfelds mit einer ersten Magnetfeldrichtung und einer zur ersten antiparallelen zweiten Magnetfeldrichtung des Magnetfelds ausgebildet. In der Ausgestaltung des Verfahrens wird von der Durchflussmesssteuerung die Magnetfelderzeugungsvorrichtung zur Erzeugung des geschalteten Gleichmagnetfelds angesteuert, wird die Anzahl der Spannungsmessungen einmal während der ersten Magnetfeldrichtung und einmal während der zweiten Magnetfeldrichtung ausgeführt und wird aus beiden Anzahlen von Spannungsmessungen der Durchfluss des Mediums bestimmt. Wenn Spannungsmessungen bei einer der beiden Magnetfeldrichtungen aufgrund von Impedanzmessungen verworfen werden, dann werden die entsprechenden Spannungsmessungen auch bei der anderen der beiden Magnetfeldrichtungen verworfen.

Das geschaltete Gleichmagnetfeld hat über der Zeit einen rechteckigen Verlauf. Das Ansteuern der Magnetfelderzeugungsvorrichtung bewirkt, dass das Magnetfeld entweder von der ersten Magnetfeldrichtung zur zweiten Magnetfeldrichtung oder von der zweiten Magnetfeldrichtung zur ersten Magnetfeldrichtung wechselt. Ein Wechsel der Magnetfeldrichtung geht dabei einher mit einem Einschwingen des Magnetfelds, welches nach dem Einschwingen in beiden Magnetfeldrichtungen den gleichen Betrag aufweist. Die Spannungsmessungen werden dabei nach dem Einschwingen des Magnetfelds ausgeführt, also dann, wenn es eingeschwungen ist.

In einer Weiterbildung des vorstehenden Verfahrens und wenn ein Mittelwert gebildet wird, wird die Anzahl der Mittelwerte separat für die erste Magnetfeldrichtung und für die zweite Magnetfeldrichtung bestimmt.

In einer Weiterbildung davon wird von der Durchflussmesssteuerung bei der Ansteuerung der Magnetfelderzeugungsvorrichtung ein Umschaltzeitpunkt des geschalteten Gleichmagnetfelds durch ein Umschaltsignal über die Signalleitung der Eigenschaftsmesssteuerung signalisiert und wird von der Eigenschaftsmesssteuerung dem Umschaltsignal der Umschaltzeitpunkt entnommen und die Impedanzmessungen werden zu dem Umschaltzeitpunkt begonnen. Der Umschaltzeitpunkt ist somit der Zeitpunkt, wenn die Magnetfeldrichtung wechselt.

Die im Zusammenhang mit der Bestimmung der mindestens einen Eigenschaft des Mediums beschriebenen Verfahrensschritte werden, wenn nichts anderes angegeben ist, von der Eigenschaftsmesssteuerung ausgeführt. Die im Zusammenhang mit der Bestimmung des Durchflusses des Mediums beschriebenen Verfahrensschritte werden, wenn nichts anderes angegeben ist, von der Durchflussmesssteuerung ausgeführt.

Die hergeleitete Aufgabe ist auch durch ein Messsystem mit den Merkmalen von Anspruch 14 gelöst.

Das Messsystem ist dadurch gekennzeichnet, dass das Messsystem eine Abschirmung und eine Signalleitung aufweist. Die Abschirmung schirmt dabei den Messrohrinnenraum gegen externe Störung ab. Die Durchflussmesssteuerung und die Eigenschaftsmesssteuerung sind über die Signalleitung miteinander verbunden.

Weiter ist die Eigenschaftsmesssteuerung zusätzlich ausgebildet, während der Impedanzmessungen die Impedanzmessdauer durch ein Messsignal über die Signalleitung der Durchflussmesssteuerung zu signalisieren.

Weiter ist die Durchflussmesssteuerung ausgebildet, dem Messsignal die Impedanzmessdauer zu entnehmen, die während der Impedanzmessungen ausgeführten Spannungsmessungen zu verwerfen und aus den verbliebenen Spannungsmessungen den Durchfluss des Mediums zu bestimmen.

In einer Ausgestaltung des Messsystems sind die Eigenschaftsmesssteuerung und die Durchflussmesssteuerung derart ausgebildet, dass eine Verzögerungszeit des Messsignals kleiner als eine Periodendauer der Abtastrate ist. Dadurch wird verhindert, dass Spannungsmessungen verworfen werden, während derer gar keine Impedanzmessungen ausgeführt werden.

Darüber hinaus ist die Aufgabe auch durch ein Messsystem mit den Merkmalen von Anspruch 16 gelöst.

Das Messsystem ist dadurch gekennzeichnet, dass das Messsystem eine Abschirmung, eine Signalleitung und einen Taktgeber aufweist. Die Abschirmung schirmt den Messrohrinnenraum gegen externe Störungen ab. Die Durchflussmesssteuerung und die Eigenschaftsmesssteuerung sind über die Signalleitung zum einen miteinander und zum anderen jeweils mit dem Taktgeber verbunden. Vorzugsweise weist sowohl die Verbindung zwischen dem Taktgeber und der Durchflussmesssteuerung als auch die Verbindung zwischen dem Taktgeber und der Eigenschaftsmesssteuerung jeweils eine galvanische Trennung auf.

Der Taktgeber ist ausgebildet, einen Takt mit einer Taktperiode zu erzeugen. Die Durchflussmesssteuerung und die Eigenschaftsmesssteuerung sind eingerichtet, die Impedanzmessungen und die Spannungsmessungen in Abhängigkeit vom Takt zu voneinander verschiedenen Zeiten auszuführen.

Die Eigenschaftsmesssteuerung weist eine Initialisierungsphase auf und ist ausgebildet, einen Abschluss der Initialisierungsphase durch ein erstes Abschlusssignal über die Signalleitung der Durchflussmesssteuerung zu signalisieren.

Die Durchflussmesssteuerung weist eine Initialisierungsphase auf und ist ausgebildet, einen Abschluss der Initialisierungsphase durch ein zweites Abschlusssignal über die Signalleitung der Eigenschaftsmesssteuerung zu signalisieren.

Weiter ist die Eigenschaftsmesssteuerung ausgebildet, ausgelöst durch einen Empfang des zweiten Abschlusssignals mit den Ausführungen der Impedanzmessung zu beginnen.

Weiter ist die Durchflussmesssteuerung ausgebildet, ausgelöst durch einen Empfang des ersten Abschlusssignals mit dem Erzeugen des Magnetfelds zu beginnen.

Durch die Einrichtung der Durchflussmesssteuerung und der Eigenschaftsmesssteuerung, die Impedanzmessungen und die Spannungsmessungen in Abhängigkeit vom Takt zu voneinander verschiedenen Zeiten auszuführen, gewährleistet, dass eine gegenseitige Beeinträchtigung der Messungen ausgeschlossen ist.

In einer Ausgestaltung des Messsystems bilden eine Dauer des Ausführens der Impedanzmessungen und der Bestimmung der mindestens einen Eigenschaft des Mediums einen Eigenschaftsmesszyklus. Weiter bilden eine Dauer der Erzeugung des Magnetfelds, des Ausführens der Spannungsmessungen und der Bestimmung des Durchflusses des Mediums einen Durchflussmesszyklus. Weiter sind der Eigenschaftmesszyklus und der Durchflussmesszyklus jeweils ein ganzzahliges Vielfaches der Taktperiode.

In einer Weiterbildung der vorstehend beschriebenen Ausgestaltung ist das ganzzahlige Vielfache gleich 2ⁿ, wobei n eine ganze positive Zahl ist.

In einer weiteren Ausgestaltung weist das Messsystem ein Erdpotenzial auf und ist die Abschirmung umgesetzt, indem das Messrohr an beiden Enden des Messrohrinnenraums jeweils eine Verbindung mit dem Erdpotenzial aufweist.

In einer weiteren Ausgestaltung weist die Signalleitung eine galvanische Trennung auf. Durch die galvanische Trennung werden Ringströme über das Eigenschaftsmessgerät, das Durchflussmessgerät und das Medium verhindert.

In einer weiteren Ausgestaltung ist das Messsystem ausgebildet, eines der zuvor beschriebenen Verfahren auszuführen.

Im Übrigen gelten die Ausführungen zu den Verfahren entsprechend für die Messsysteme und umgekehrt. Insbesondere sind die Verfahren auch auf den oben beschriebenen Messsystemen ausführbar.

Im Einzelnen ist eine Vielzahl von Möglichkeiten gegeben, das Messsystem und das Verfahren auszugestalten und weiterzubilden. Dazu wird verwiesen sowohl auf die den unabhängigen Ansprüchen nachgeordneten Ansprüche als auch auf die nachfolgende Beschreibung von bevorzugten Ausführungsbeispielen in Verbindung mit der Zeichnung. In der Zeichnung zeigt
Fig. 1 ein erstes Ausführungsbeispiel eines Messsystems und
Fig. 2 ein zweites Ausführungsbeispiel eines Messsystems.

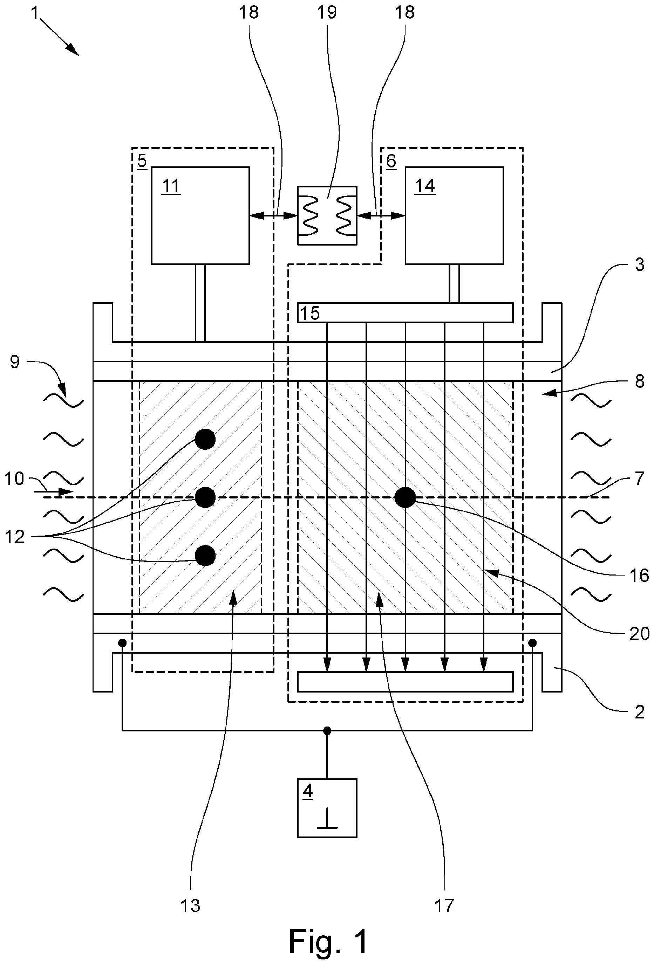

Fig. 1 zeigt wesentliche Elemente eines Ausführungsbeispiels eines Messsystems 1 abstrahiert in einem Längsschnitt.

Das Messsystems 1 weist ein Messrohr 2, einen Liner 3, ein Erdpotenzial 4, ein Eigenschaftsmessgerät 5 und ein Durchflussmessgerät 6 auf.

Das Messrohr 2 weist entlang einer Messrohrlängsachse 7 einen Messrohrinnenraum 8 auf. Der Messrohrinnenraum 8 ist mit dem Liner 3 ausgekleidet. Der Liner 3 isoliert das Messrohr 2 von einem Medium 9 im Messrohrinnenraum 8 elektrisch und schützt es auch vor Verschleiß durch das Medium 9. Das Medium 9 strömt in Richtung 10 durch das Messrohr 2.

Der Messrohrinnenraum 8 ist gegen externe Störungen abgeschirmt. Die Abschirmung ist umgesetzt, indem das Messrohr 2 an beiden Enden des Messrohrinnenraums 8 jeweils eine Verbindung mit dem Erdpotenzial 4 aufweist.

Das Eigenschaftsmessgerät 5 weist eine Eigenschaftsmesssteuerung 11 und zwölf Eigenschaftsmesselektroden 12 auf, wobei in Fig. 1 nur drei Eigenschaftsmesselektroden 12 sichtbar sind. Die zwölf Eigenschaftsmesselektroden 12 sind in einem ersten Bereich 13 des Messrohrinnenraums 8 am Messrohr 2 angeordnet. Der erste Bereich 13 ist durch eine Schraffur in Fig. 1 gekennzeichnet.

Das Durchflussmessgerät 6 weist eine Durchflussmesssteuerung 14, eine Magnetfelderzeugungsvorrichtung 15 und zwei Durchflussmesselektroden 16 auf, wobei in Fig. 1 nur eine Durchflussmesselektrode 16 sichtbar ist. Die Magnetfelderzeugungsvorrichtung 15 und die mindestens zwei Durchflussmesselektroden 16 sind in einem vom ersten Bereich 13 verschiedenen zweiten Bereich 17 des Messrohrinnenraums 8 am Messrohr 2 angeordnet.

Die Magnetfelderzeugungsvorrichtung 15 ist zur Erzeugung eines geschalteten Gleichmagnetfelds mit einer ersten Magnetfeldrichtung und einer zur ersten antiparallelen zweiten Magnetfeldrichtung des Magnetfelds 20 ausgebildet. In Fig. 1 ist die erste Magnetfeldrichtung eingezeichnet.

Die Eigenschaftsmesssteuerung 11 und die Durchflussmesssteuerung 14 sind miteinander über eine Signalleitung 18 verbunden. Dabei weist die Signalleitung 18 eine galvanische Trennung 19 auf.

Die Eigenschaftsmesssteuerung 11 ist ausgebildet, zunächst eine Anzahl von Widerstandsmessungen mit den zwölf Eigenschaftsmesselektroden 12 am Medium 9 im ersten Bereich 13 über eine Impedanzmessdauer auszuführen und dann aus den Widerstandsmessungen unter Verwendung von Widerstandstomografie sowohl ein Anteil als auch eine Größenverteilung von festen Bestandteilen im Medium 9 als Eigenschaften des Mediums 9 zu bestimmen. Weiter ist die Eigenschaftsmesssteuerung 11 ausgebildet, während der Widerstandsmessungen die Impedanzmessdauer durch ein Messsignal über die Signalleitung 18 der Durchflussmesssteuerung 14 zu signalisieren.

Die Durchflussmesssteuerung 14 ist ausgebildet, mit der Magnetfelderzeugungsvorrichtung 15 ein Magnetfeld 20 im Medium 9 im zweiten Bereich 17 zu erzeugen und eine Anzahl von Spannungsmessungen mit einer Abtastrate mit den zwei Durchflussmesselektroden 16 am Medium 9 im zweiten Bereich 17 auszuführen. Weiter ist die Durchflussmesssteuerung 14 ausgebildet, dem Messsignal die Impedanzmessdauer zu entnehmen, die während der Widerstandsmessungen ausgeführten Spannungsmessungen zu verwerfen und aus den verbliebenen Spannungsmessungen den Durchfluss des Mediums 9 zu bestimmen.

Im Betrieb führt das Messsystem 1 das folgende Verfahren aus:
Von der Eigenschaftsmesssteuerung 11 wird zunächst die Anzahl von Widerstandsmessungen mit den zwölf Eigenschaftsmesselektroden 12 am Medium 9 im ersten Bereich 13 über die Impedanzmessdauer ausgeführt und wird währenddessen die Impedanzmessdauer durch das Messsignal über die Signalleitung 18 der Durchflussmesssteuerung 14 signalisiert und wird dann aus den Widerstandsmessungen unter Verwendung von Widerstandstomografie sowohl der Anteil als auch die Größenverteilung von festen Bestandteilen im Medium 9 bestimmt.

Von der Durchflussmesssteuerung 14 wird mit der Magnetfelderzeugungsvorrichtung 15 das Magnetfeld 20 im Medium 9 im zweiten Bereich 17 erzeugt. Und zwar wird die Magnetfelderzeugungsvorrichtung 15 zur Erzeugung des geschalteten Gleichmagnetfelds angesteuert. Dabei wird von der Durchflussmesssteuerung 14 ein Umschaltzeitpunkt des geschalteten Gleichmagnetfelds durch ein Umschaltsignal über die Signalleitung 18 der Eigenschaftsmesssteuerung 11 signalisiert. Von der Eigenschaftsmesssteuerung 11 wird dem Umschaltsignal der Umschaltzeitpunkt entnommen und werden die Widerstandsmessungen zu dem Umschaltzeitpunkt begonnen.

Weiter wird von der Durchflussmesssteuerung 14 die Anzahl von Spannungsmessungen mit der Abtastrate mit den zwei Durchflussmesselektroden 16 am Medium 9 im zweiten Bereich 17 einmal während der ersten Magnetfeldrichtung und einmal während der zweiten Magnetfeldrichtung ausgeführt, wird dem Messsignal die Impedanzmessdauer entnommen und werden die während der Impedanzmessungen ausgeführten Spannungsmessungen für beide Magnetfeldrichtungen verworfen.

Weiter wird von der Durchflussmesssteuerung nur dann aus den verbliebenen Spannungsmessungen der Durchfluss des Mediums 9 bestimmt, wenn eine Anzahl der jeweils verbliebenen Spannungsmessungen mindestens 30 beträgt.

Zur Bestimmung des Durchflusses des Mediums 9 wird von der Durchflussmesssteuerung 14 ein Mittelwert aus den verbliebenen Spannungsmessungen gebildet, und zwar separat für die erste Magnetfeldrichtung und die zweite Magnetfeldrichtung.

Das beschriebene Verfahren wird vom Messsystem 1 mehrfach ausgeführt, weshalb eine Anzahl von Mittelwerten bestimmt wird.

Von der Durchflussmesssteuerung 14 wird aus einer Anzahl von jeweils 7 Mittelwerten ein Trend bestimmt. Unter Verwendung des Trends werden von der Durchflussmesssteuerung 14 ggfs. vorhandene Lücken in einer Abfolge der Mittelwerte gefüllt.

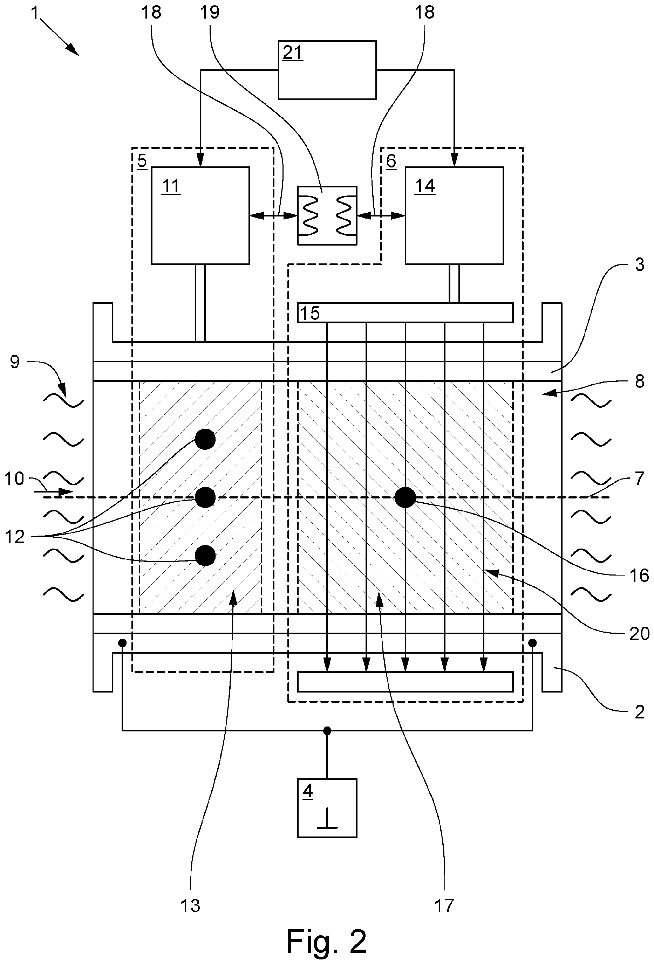

Fig. 2 zeigt wesentliche Elemente eines weiteren Ausführungsbeispiels eines Messsystems 1 abstrahiert in einem Längsschnitt.

Im Folgenden wird nur auf die Unterschiede zwischen dem in Fig. 1 und dem in Fig. 2 dargestellten Ausführungsbeispiel eingegangen. Im Übrigen gelten die Ausführungen zu dem in Fig. 1 dargestellten Ausführungsbeispiel für das in Fig. 2 dargestellte Ausführungsbeispiel entsprechend.

Das in Fig. 2 dargestellte Messsystem 1 weist zusätzlich einen Taktgeber 21 auf. Der Taktgeber 21 ist ausgebildet, einen Takt mit einer Taktperiode zu erzeugen. Die Durchflussmesssteuerung 14 und die Eigenschaftsmesssteuerung 11 sind eingerichtet, die Impedanzmessungen und die Spannungsmessungen in Abhängigkeit vom Takt zu voneinander verschiedenen Zeiten auszuführen,

Die Eigenschaftsmesssteuerung 11 weist eine Initialisierungsphase auf und ist ausgebildet, einen Abschluss der Initialisierungsphase durch ein erstes Abschlusssignal über die Signalleitung 18 der Durchflussmesssteuerung 14 zu signalisieren.

Die Durchflussmesssteuerung 14 weist ebenfalls eine Initialisierungsphase auf und ist ausgebildet, einen Abschluss der Initialisierungsphase durch ein zweites Abschlusssignal über die Signalleitung 18 der Eigenschaftsmesssteuerung 11 zu signalisieren.

Die Eigenschaftsmesssteuerung 14 ist weiter ausgebildet, ausgelöst durch einen Empfang des zweiten Abschlusssignals mit dem Ausführen der Impedanzmessungen zu beginnen.

Die Durchflussmesssteuerung 11 ist weiter ausgebildet, ausgelöst durch einen Empfang des ersten Abschlusssignals mit dem Erzeugen des Magnetfelds zu beginnen.

### Bezugszeichen

- 1: Messsystem
- 2: Messrohr
- 3: Liner
- 4: Erdpotenzial
- 5: Eigenschaftsmessgerät
- 6: Durchflussmessgerät
- 7: Messrohrlängsachse
- 8: Messrohrinnenraum
- 9: Medium
- 10: Strömungsrichtung
- 11: Eigenschaftsmesssteuerung
- 12: Eigenschaftsmesselektroden
- 13: Erster Bereich
- 14: Durchflussmesssteuerung
- 15: Magnetfelderzeugungsvorrichtung
- 16: Durchflussmesselektroden
- 17: Zweiter Bereich
- 18: Signalleitung
- 19: Galvanische Trennung
- 20: Magnetfeld
- 21: Taktgeber

## Patentansprüche

1. Verfahren zum Betreiben eines Messsystems (1) mit einem Messrohr (2), einem Liner (3), einer Abschirmung, einem Eigenschaftsmessgerät (5) und einem Durchflussmessgerät (6),
wobei das Messrohr (2) entlang einer Messrohrlängsachse (7) einen Messrohrinnenraum (8) aufweist,
wobei der Messrohrinnenraum (8) mit dem Liner (3) ausgekleidet ist und der Liner (3) das Messrohr (2) von einem Medium (9) im Messrohrinnenraum (8) elektrisch isoliert und vor Verschleiß durch das Medium (9) schützt,
wobei die Abschirmung den Messrohrinnenraum (8) gegen externe Störungen abschirmt,
wobei das Eigenschaftsmessgerät (5) eine Eigenschaftsmesssteuerung (11) und mindestens drei Eigenschaftsmesselektroden (12) aufweist und die mindestens drei Eigenschaftsmesselektroden (12) in einem ersten Bereich (13) des Messrohrinnenraums (8) am Messrohr (2) angeordnet sind,
wobei das Durchflussmessgerät (6) eine Durchflussmesssteuerung (14), eine Magnetfelderzeugungsvorrichtung (15) und mindestens zwei Durchflussmesselektroden (16) aufweist und die Magnetfelderzeugungsvorrichtung (15) und die mindestens zwei Durchflussmesselektroden (16) in einem vom ersten Bereich (13) verschiedenen zweiten Bereich (17) des Messrohrinnenraums (8) am Messrohr (2) angeordnet sind,
wobei die Durchflussmesssteuerung (14) und die Eigenschaftsmesssteuerung (11) miteinander über eine Signalleitung (18) verbunden sind,
wobei von der Eigenschaftsmesssteuerung (11) zunächst eine Anzahl von Impedanzmessungen mit den mindestens drei Eigenschaftsmesselektroden (12) am Medium (9) im ersten Bereich (13) über eine Impedanzmessdauer ausgeführt wird und währenddessen die Impedanzmessdauer durch ein Messsignal über die Signalleitung (18) der Durchflussmesssteuerung (14) signalisiert wird und dann aus den Impedanzmessungen unter Verwendung von Impedanztomografie mindestens eine Eigenschaft des Mediums (9) bestimmt wird und
wobei von der Durchflussmesssteuerung (14) mit der Magnetfelderzeugungsvorrichtung (15) ein Magnetfeld (20) im Medium (9) im zweiten Bereich (17) erzeugt wird, eine Anzahl von Spannungsmessungen mit einer Abtastrate mit den mindestens zwei Durchflussmesselektroden (16) am Medium (9) im zweiten Bereich (17) ausgeführt wird, von der Durchflussmesssteuerung (14) dem Messsignal die Impedanzmessdauer entnommen wird, die während der Impedanzmessungen ausgeführten Spannungsmessungen verworfen werden und aus den verbliebenen Spannungsmessungen ein Durchfluss des Mediums (9) bestimmt wird.

2. Verfahren nach Anspruch 1, wobei Widerstandsmessungen als die Impedanzmessungen ausgeführt werden und aus den Impedanzmessungen unter Verwendung von Widerstandstomografie die mindestens eine Eigenschaft des Mediums (9) bestimmt wird.

3. Verfahren nach Anspruch 1 oder 2, wobei die mindestens eine Eigenschaft ein Anteil und/oder eine Größe von festen Bestandteilen im Medium (9) ist.

4. Verfahren nach einem der Ansprüche 1 bis 3, wobei von der Eigenschaftsmesssteuerung (11) nach der Bestimmung der mindestens einen Eigenschaft eine Dauer gewartet wird, bevor die nächste Anzahl von Impedanzmessungen ausgeführt wird.

5. Verfahren nach einem der Ansprüche 1 bis 4, wobei nur dann aus den verbliebenen Spannungsmessungen der Durchfluss des Mediums (9) bestimmt wird, wenn eine Anzahl der verbliebenen Spannungsmessungen mindestens 30, bevorzugt 40 und besonders bevorzugt 50 beträgt.

6. Verfahren nach einem der Ansprüche 1 bis 5, wobei aus den verbliebenen Spannungsmessungen während der und zur Bestimmung des Durchflusses ein Mittelwert gebildet wird.

7. Verfahren nach Anspruch 6, wobei das Verfahren mehrfach ausgeführt wird und wobei aus einer Anzahl der Mittelwerte ein Trend bestimmt wird und unter Verwendung des Trends Lücken in einer zeitlichen Abfolge der Mittelwerte ausgefüllt werden.

8. Verfahren nach Anspruch 7, wobei der Trend aus einer Anzahl von 3 bis 7 Mittelwerten gebildet wird.

9. Verfahren nach Anspruch 7 oder 8, wobei bei der Bestimmung des Trends Änderungen zwischen jüngeren Mittelwerten stärker als Änderungen zwischen älteren Mittelwerten gewichtet werden.

10. Verfahren nach Anspruch 9, wobei der Trend bestimmt wird, indem zunächst jeweils eine Steigung zwischen zwei aufeinanderfolgenden Mittelwerten bestimmt wird, und dann eine durchschnittliche Steigung bestimmt wird, indem ein Mittelwert zunächst aus den beiden ältesten Steigungen und dann jeweils aus dem zuvor bestimmten Mittelwert und der nächst jüngeren Steigung bestimmt wird.

11. Verfahren nach einem der Ansprüche 1 bis 10, wobei die Magnetfelderzeugungsvorrichtung (15) zur Erzeugung eines geschalteten Gleichmagnetfelds mit einer ersten Magnetfeldrichtung und einer zur ersten antiparallelen zweiten Magnetfeldrichtung des Magnetfelds (20) ausgebildet ist und
wobei von der Durchflussmesssteuerung (14) die Magnetfelderzeugungsvorrichtung (15) zur Erzeugung des geschalteten Gleichmagnetfelds angesteuert wird, die Anzahl der Spannungsmessungen einmal während der ersten Magnetfeldrichtung und einmal während der zweiten Magnetfeldrichtung ausgeführt wird und aus beiden Anzahlen von Spannungsmessungen der Durchfluss des Mediums (9) bestimmt wird.

12. Verfahren nach Anspruch 11 und einem der Ansprüche 6 bis 10, wobei die Anzahl der Mittelwerte separat für die erste Magnetfeldrichtung und die zweite Magnetfeldrichtung bestimmt wird.

13. Verfahren nach Anspruch 11 oder 12, wobei von der Durchflussmesssteuerung (14) bei der Ansteuerung der Magnetfelderzeugungsvorrichtung (15) ein Umschaltzeitpunkt des geschalteten Gleichmagnetfelds durch ein Umschaltsignal über die Signalleitung (18) der Eigenschaftsmesssteuerung (11) signalisiert wird und
wobei von der Eigenschaftsmesssteuerung (11) dem Umschaltsignal der Umschaltzeitpunkt entnommen wird und die Impedanzmessungen zu dem Umschaltzeitpunkt begonnen werden.

14. Messsystem (1) mit einem Messrohr (2), einem Liner (3), einem Eigenschaftsmessgerät (5) und einem Durchflussmessgerät (6),
wobei das Messrohr (2) entlang einer Messrohrlängsachse (7) einen Messrohrinnenraum (8) aufweist,
wobei der Messrohrinnenraum (8) mit dem Liner (3) ausgekleidet ist und der Liner (3) das Messrohr (2) von einem Medium (9) im Messrohrinnenraum (8) elektrisch isoliert und vor Verschleiß durch das Medium (9) schützt,
wobei das Eigenschaftsmessgerät (5) eine Eigenschaftsmesssteuerung (11) und mindestens drei Eigenschaftsmesselektroden (12) aufweist und die mindestens drei Eigenschaftsmesselektroden (12) in einem ersten Bereich (13) des Messrohrinnenraums (8) am Messrohr (2) angeordnet sind,
wobei die Eigenschaftsmesssteuerung (11) ausgebildet ist, zunächst eine Anzahl von Impedanzmessungen mit den mindestens drei Eigenschaftsmesselektroden (12) am Medium (9) im ersten Bereich (13) über eine Impedanzmessdauer auszuführen und dann aus den Impedanzmessungen unter Verwendung von Impedanztomografie mindestens eine Eigenschaft des Mediums (9) zu bestimmen,
wobei das Durchflussmessgerät (6) eine Durchflussmesssteuerung (14), eine Magnetfelderzeugungsvorrichtung (15) und mindestens zwei Durchflussmesselektroden (16) aufweist und die Magnetfelderzeugungsvorrichtung (15) und die mindestens zwei Durchflussmesselektroden (16) in einem vom ersten Bereich (13) verschiedenen zweiten Bereich (17) des Messrohrinnenraums (8) am Messrohr (2) angeordnet sind und
wobei die Durchflussmesssteuerung (14) ausgebildet ist, mit der Magnetfelderzeugungsvorrichtung (15) ein Magnetfeld (20) im Medium (9) im zweiten Bereich (17) zu erzeugen, eine Anzahl von Spannungsmessungen mit einer Abtastrate mit den mindestens zwei Durchflussmesselektroden (16) am Medium (9) im zweiten Bereich (17) auszuführen und aus den Spannungsmessungen einen Durchfluss des Mediums (9) zu bestimmen,
**dadurch gekennzeichnet,**
**dass** das Messsystem (1) eine Abschirmung und eine Signalleitung (18) aufweist,
**dass** die Abschirmung den Messrohrinnenraum (8) gegen externe Störungen abschirmt,
**dass** die Durchflussmesssteuerung (14) und die Eigenschaftsmesssteuerung (11) über die Signalleitung (18) miteinander verbunden sind,
**dass** die Eigenschaftsmesssteuerung (11) ausgebildet ist, während der Impedanzmessungen die Impedanzmessdauer durch ein Messsignal über die Signalleitung (18) der Durchflussmesssteuerung (14) zu signalisieren und
**dass** die Durchflussmesssteuerung (14) ausgebildet ist, dem Messsignal die Impedanzmessdauer zu entnehmen, die während der Impedanzmessungen ausgeführten Spannungsmessungen zu verwerfen und aus den verbliebenen Spannungsmessungen den Durchfluss des Mediums (9) zu bestimmen.

15. Messsystem (1) nach Anspruch 14, **dadurch gekennzeichnet, dass** die Eigenschaftsmesssteuerung (11) und die Durchflussmesssteuerung (14) derart ausgebildet sind, dass eine Verzögerungszeit des Messsignals kleiner als eine Periodendauer der Abtastrate ist.

16. Messsystem (1) mit einem Messrohr (2), einem Liner (3), einem Eigenschaftsmessgerät (5) und einem Durchflussmessgerät (6),
wobei das Messrohr (2) entlang einer Messrohrlängsachse (7) einen Messrohrinnenraum (8) aufweist,
wobei der Messrohrinnenraum (8) mit dem Liner (3) ausgekleidet ist und der Liner (3) das Messrohr (2) von einem Medium (9) im Messrohrinnenraum (8) elektrisch isoliert und vor Verschleiß durch das Medium (9) schützt,
wobei das Eigenschaftsmessgerät (5) eine Eigenschaftsmesssteuerung (11) und mindestens drei Eigenschaftsmesselektroden (12) aufweist und die mindestens drei Eigenschaftsmesselektroden (12) in einem ersten Bereich (13) des Messrohrinnenraums (8) am Messrohr (2) angeordnet sind,
wobei die Eigenschaftsmesssteuerung (11) ausgebildet ist, zunächst eine Anzahl von Impedanzmessungen mit den mindestens drei Eigenschaftsmesselektroden (12) am Medium (9) im ersten Bereich (13) über eine Impedanzmessdauer auszuführen und dann aus den Impedanzmessungen unter Verwendung von Impedanztomografie mindestens eine Eigenschaft des Mediums (9) zu bestimmen,
wobei das Durchflussmessgerät (6) eine Durchflussmesssteuerung (14), eine Magnetfelderzeugungsvorrichtung (15) und mindestens zwei Durchflussmesselektroden (16) aufweist und die Magnetfelderzeugungsvorrichtung (15) und die mindestens zwei Durchflussmesselektroden (16) in einem vom ersten Bereich (13) verschiedenen zweiten Bereich (17) des Messrohrinnenraums (8) am Messrohr (2) angeordnet sind und
wobei die Durchflussmesssteuerung (14) ausgebildet ist, mit der Magnetfelderzeugungsvorrichtung (15) ein Magnetfeld (20) im Medium (9) im zweiten Bereich (17) zu erzeugen, eine Anzahl von Spannungsmessungen mit einer Abtastrate mit den mindestens zwei Durchflussmesselektroden (16) am Medium (9) im zweiten Bereich (17) auszuführen und aus den Spannungsmessungen einen Durchfluss des Mediums (9) zu bestimmen,
**dadurch gekennzeichnet,**
**dass** das Messsystem (1) eine Abschirmung, eine Signalleitung (18) und einen Taktgeber (21) aufweist,
**dass** die Abschirmung den Messrohrinnenraum (8) gegen externe Störungen abschirmt,
**dass** die Durchflussmesssteuerung (14) und die Eigenschaftsmesssteuerung (11) über die Signalleitung (18) zum einen miteinander und zum anderen jeweils mit dem Taktgeber (21) verbunden sind,
**dass** der Taktgeber (21) ausgebildet ist, einen Takt mit einer Taktperiode zu erzeugen,
**dass** die Durchflussmesssteuerung (14) und die Eigenschaftsmesssteuerung (11) eingerichtet sind, die Impedanzmessungen und die Spannungsmessungen in Abhängigkeit vom Takt zu voneinander verschiedenen Zeiten auszuführen,
**dass** die Eigenschaftsmesssteuerung (11) eine Initialisierungsphase aufweist und ausgebildet ist, einen Abschluss der Initialisierungsphase durch ein erstes Abschlusssignal über die Signalleitung (18) der Durchflussmesssteuerung (14) zu signalisieren,
**dass** die Durchflussmesssteuerung (14) eine Initialisierungsphase aufweist und ausgebildet ist, einen Abschluss der Initialisierungsphase durch ein zweites Abschlusssignal über die Signalleitung (18) der Eigenschaftsmesssteuerung (11) zu signalisieren,
**dass** die Eigenschaftsmesssteuerung (11) ausgebildet ist, ausgelöst durch einen Empfang des zweiten Abschlusssignals mit dem Ausführen der Impedanzmessungen zu beginnen und
**dass** die Durchflussmesssteuerung (14) ausgebildet ist, ausgelöst durch einen Empfang des ersten Abschlusssignals mit dem Erzeugen des Magnetfelds (20) zu beginnen.

17. Messsystem (1) nach Anspruch 16, **dadurch gekennzeichnet,**
**dass** das eine Dauer des Ausführens der Impedanzmessungen und der Bestimmung der mindestens einen Eigenschaft des Mediums (9) einen Eigenschaftsmesszyklus bilden,
**dass** eine Dauer der Erzeugung des Magnetfelds (20), des Ausführens der Spannungsmessungen und der Bestimmung des Durchflusses des Mediums (9) einen Durchflussmesszyklus bilden und
**dass** der Eigenschaftmesszyklus und der Durchflussmesszyklus jeweils ein ganzzahliges Vielfaches der Taktperiode sind.

18. Messsystem (1) nach Anspruch 17, **dadurch gekennzeichnet, dass** das ganzzahlige Vielfache gleich 2ⁿ ist, wobei n eine ganze positive Zahl ist.

19. Messsystem (1) nach einem der Ansprüche 15 bis 18 **dadurch gekennzeichnet, dass** das Messsystem (1) ein Erdpotenzial (4) aufweist und dass die Abschirmung umgesetzt ist, indem das Messrohr (2) an beiden Enden des Messrohrinnenraums (8) jeweils eine Verbindung mit dem Erdpotenzial (4) aufweist.

20. Messsystem (1) nach einem der Ansprüche 15 bis 19, **dadurch gekennzeichnet, dass** die Signalleitung (18) eine galvanische Trennung (19) aufweist.

21. Messsystem (1) nach einem der Ansprüche 15 bis 20, **dadurch gekennzeichnet, dass** das Messsystem (1) ausgebildet ist, ein Verfahren nach einem der Ansprüche 2 bis 14 auszuführen.

## Claims

1. Method for operating a measuring system (1) with a measuring tube (2), a liner (3), a shield, a property measuring device (5) and a flowmeter (6),
wherein the measuring tube (2) has a measuring tube interior (8) along a measuring tube longitudinal axis (7),
wherein the measuring tube interior (8) is lined with the liner (3) and the liner (3) electrically insulates the measuring tube (2) from a medium (9) in the measuring tube interior (8) and protects it from wear by the medium (9),
wherein the shielding shields the measuring tube interior (8) from external interference,
wherein the property measuring device (5) comprises a property measurement controller (11) and at least three property measurement electrodes (12) and the at least three property measurement electrodes (12) are arranged in a first region (13) of the measuring tube interior (8) on the measuring tube (2),
wherein the flowmeter (6) has a flow measurement controller (14), a magnetic field generator (15) and at least two flow measurement electrodes (16), and the magnetic field generator (15) and the at least two flow measurement electrodes (16) are arranged on the measuring tube (2) in a second region (17), different from the first region (13), of the measuring tube interior (8),
wherein the flow measurement controller (14) and the property measurement controller (11) are connected to each other via a signal line (18),
wherein the property measurement controller (11) first carries out a number of impedance measurements with the at least three property measurement electrodes (12) on the medium (9) in the first region (13) over an impedance measurement period and, at the same time, the impedance measurement period is signaled by a measuring signal via the signal line (18) to the flow measurement controller (14) and then at least one property of the medium (9) is determined from the impedance measurements using impedance tomography, and
wherein a magnetic field (20) is generated in the medium (9) in the second region (17) by the flow measurement controller (14) using the magnetic field generator (15), a number of voltage measurements are carried out at a sampling rate using the at least two flow measurement electrodes (16) on the medium (9) in the second region (17), the impedance measurement duration is taken from the measuring signal by the flow measurement controller (14), the voltage measurements carried out during the impedance measurements are discarded, and a flow rate of the medium (9) is determined from the remaining voltage measurements.

2. Method according to claim 1, wherein resistance measurements are carried out as the impedance measurements and the at least one property of the medium (9) is determined from the impedance measurements using resistance tomography.

3. Method according to claim 1 or 2, wherein the at least one property is a proportion and/or a magnitude of solid constituents in the medium (9).

4. Method according to any one of claims 1 to 3, wherein, after the determination of the at least one property, the property measurement controller (11) waits for a duration before the next number of impedance measurements is carried out.

5. Method according to any one of claims 1 to 4, wherein the flow rate of the medium (9) is determined from the remaining voltage measurements only if a number of the remaining voltage measurements is at least 30, preferably 40 and particularly preferably 50.

6. Method according to any one of claims 1 to 5, wherein an average value is formed from the remaining voltage measurements during the determination and for the determination of the flow rate.

7. Method according to claim 6, wherein the method is carried out several times and wherein a trend is determined from a number of the average values and gaps in a time sequence of the average values are filled using the trend.

8. Method according to claim 7, wherein the trend is formed from a number of 3 to 7 average values.

9. Method according to claim 7 or 8, wherein changes between younger average values are weighted more heavily than changes between older average values when determining the trend.

10. Method according to claim 9, wherein the trend is determined by first determining a slope between each of two successive average values, and then determining an average slope by determining an average value first from the two oldest slopes and then from each of the previously determined average value and the next youngest slope.

11. Method according to any one of claims 1 to 10, wherein the magnetic field generator (15) is designed for generating a switched DC magnetic field with a first magnetic field direction and a second magnetic field direction of the magnetic field (20) which is anti-parallel to the first, and
wherein the magnetic field generator (15) is controlled by the flow measurement controller (14) for generating the switched DC magnetic field, the number of voltage measurements is carried out once during the first magnetic field direction and once during the second magnetic field direction, and the flow rate of the medium (9) is determined from both numbers of voltage measurements.

12. Method according to claim 11 and any one of claims 6 to 10, wherein the number of average values is determined separately for the first magnetic field direction and the second magnetic field direction.

13. Method according to claim 11 or 12, wherein a switching time of the switched DC magnetic field is signaled by the flow measurement controller (14) during the activation of the magnetic field generator (15) by a switching signal via the signal line (18) to the property measurement controller (11), and
wherein the switching time is taken from the switching signal by the property measurement controller (11) and the impedance measurements are started at the switching time.

14. Measuring system (1) having a measuring tube (2), a liner (3), a property measuring device (5) and a flowmeter (6),
wherein the measuring tube (2) has a measuring tube interior (8) along a measuring tube longitudinal axis (7),
wherein the measuring tube interior (8) is lined with the liner (3) and the liner (3) electrically insulates the measuring tube (2) from a medium (9) in the measuring tube interior (8) and protects it from wear by the medium (9),
wherein the property measuring device (5) comprises a property measurement controller (11) and at least three property measurement electrodes (12) and the at least three property measurement electrodes (12) are arranged in a first region (13) of the measuring tube interior space (8) on the measuring tube (2),
wherein the property measurement controller (11) is designed to first carry out a number of impedance measurements with the at least three property measurement electrodes (12) on the medium (9) in the first region (13) over an impedance measurement period and then to determine at least one property of the medium (9) from the impedance measurements using impedance tomography,
wherein the flowmeter (6) comprises a flow measurement controller (14), a magnetic field generator (15) and at least two flow measurement electrodes (16), and the magnetic field generator (15) and the at least two flow measurement electrodes (16) are arranged on the measuring tube (2) in a second region (17) of the measuring tube interior (8) which is different from the first region (13), and
wherein the flow measurement controller (14) is designed for generating a magnetic field (20) in the medium (9) in the second region (17) by means of the magnetic field generator (15), for carrying out a number of voltage measurements at a sampling rate with the at least two flow measurement electrodes (16) on the medium (9) in the second region (17), and for determining a flow rate of the medium (9) from the voltage measurements,
**characterized in**
**that** the measuring system (1) comprises a shielding and a signal line (18),
**that** the shielding shields the measuring tube interior (8) from external interference,
**that** the flow measurement controller (14) and the property measurement controller (11) are connected to one another via the signal line (18),
**that** the property measurement controller (11) is designed for signaling the impedance measurement duration during the impedance measurements by means of a measuring signal via the signal line (18) to the flow measurement controller (14), and
**that** the flow measurement controller (14) is designed for obtaining the impedance measurement duration from the measuring signal, for discarding the voltage measurements carried out during the impedance measurements and for determining the flow rate of the medium (9) from the remaining voltage measurements.

15. Measuring system (1) according to claim 14, **characterized in that** the impedance measurement controller (11) and the flow measurement controller (14) are designed such that a delay time of the measuring signal is smaller than a period of the sampling rate.

16. Measuring system (1) comprising a measuring tube (2), a liner (3), a property measuring device (5) and a flowmeter (6),
wherein the measuring tube (2) has a measuring tube interior (8) along a measuring tube longitudinal axis (7),
wherein the measuring tube interior (8) is lined with the liner (3) and the liner (3) electrically insulates the measuring tube (2) from a medium (9) in the measuring tube interior (8) and protects it from wear by the medium (9),
wherein the property measuring device (5) comprises a property measurement controller (11) and at least three property measurement electrodes (12) and the at least three property measurement electrodes (12) are arranged in a first region (13) of the measuring tube interior (8) on the measuring tube (2),
wherein the property measurement controller (11) is designed for first performing a number of impedance measurements with the at least three property measurement electrodes (12) on the medium (9) in the first region (13) over an impedance measurement period and then for determining at least one property of the medium (9) from the impedance measurements using impedance tomography,
wherein the flowmeter (6) comprises a flow measurement controller (14), a magnetic field generator (15) and at least two flow measurement electrodes (16), and the magnetic field generator (15) and the at least two flow measurement electrodes (16) are arranged on the measuring tube (2) in a second region (17) of the measuring tube interior (8) which is different from the first region (13), and
wherein the flow measurement controller (14) is designed for generating a magnetic field (20) in the medium (9) in the second region (17) by means of the magnetic field generator (15), for carrying out a number of voltage measurements at a sampling rate with the at least two flow measurement electrodes (16) on the medium (9) in the second region (17), and for determining a flow rate of the medium (9) from the voltage measurements,
**characterized in**
**that** the measuring system (1) has a shield, a signal line (18) and a clock-pulse generator (21),
**that** the shielding shields the measuring tube interior (8) from external interference,
**that** the flow measurement controller (14) and the property measurement controller (11) are connected, on the one hand, to one another and, on the other hand, in each case to the clock-pulse generator (21) via the signal line (18),
**that** the clock-pulse generator (21) is designed for generating a clock pulse with a clock period,
**that** the flow measurement controller (14) and the property measurement controller (11) are designed for carrying out the impedance measurements and the voltage measurements at times which are different from one another depending on the clock pulse,
**that** the property measurement controller (11) has an initialization phase and is designed to signal completion of the initialization phase by a first completion signal via the signal line (18) to the flow measurement controller (14),
**that** the flow measurement controller (14) has an initialization phase and is designed for signaling a termination of the initialization phase by a second termination signal via the signal line (18) to the property measurement controller (11),
**that** the property measurement controller (11) is designed for starting to carry out the impedance measurements triggered by a reception of the second termination signal, and
**that** the flow measurement controller (14) is designed for starting to generate the magnetic field (20) triggered by receiving the first termination signal.

17. Measuring system (1) according to claim 16, **characterized in**
**that** a duration of carrying out the impedance measurements and determining the at least one property of the medium (9) form a property measurement cycle,
**that** a duration of generating the magnetic field (20), carrying out the voltage measurements and determining the flow rate of the medium (9) form a flow measurement cycle, and
**that** the property measurement cycle and the flow measurement cycle are each an integral multiple of the clock period.

18. Measuring system (1) according to claim 17, **characterized in that** the integer multiple is equal to 2", wherein n is a positive integer.

19. Measuring system (1) according to any one of claims 15 to 18, **characterized in that** the measuring system (1) has a ground potential (4) and that the shielding is implemented **in that** the measuring tube (2) has a connection to the ground potential (4) at each of the two ends of the measuring tube interior (8).

20. Measuring system (1) according to any one of claims 15 to 19, **characterized in that** the signal line (18) has a galvanic isolation (19).

21. Measuring system (1) according to any one of claims 15 to 20, **characterized in that** the measuring system (1) is designed for carrying out a method according to any one of claims 2 to 14.

## Revendications

1. Procédé pour faire fonctionner un système de mesure (1) comprenant un tube de mesure (2), un revêtement (3), un blindage, un appareil (5) de mesure de propriétés et un appareil (6) de mesure du débit,
le tube de mesure (2) présentant un espace intérieur (8) de tube de mesure le long d'un axe longitudinal (7) de tube de mesure,
l'espace intérieur (8) de tube de mesure étant revêtu du revêtement (3) et le revêtement (3) isolant électriquement le tube de mesure (2) par rapport à un milieu (9) présent dans l'espace intérieur (8) du tube de mesure et le protégeant contre l'usure due au milieu (9),
le blindage protégeant l'espace intérieur du tube de mesure (8) contre les perturbations externes,
l'appareil (5) de mesure de propriétés présentant une commande (11) de mesure de propriétés et au moins trois électrodes (12) de mesure de propriétés et les au moins trois électrodes (12) de mesure de propriétés étant agencées dans une première zone (13) de l'espace intérieur du tube de mesure (8) sur le tube de mesure (2),
l'appareil (6) de mesure du débit présentant une commande (14) de mesure de débit, un dispositif (15) de génération de champ magnétique et au moins deux électrodes (16) de mesure de débit, et le dispositif (15) de génération de champ magnétique et les au moins deux électrodes (16) de mesure de débit étant agencés dans une deuxième zone (17), différente de la première zone (13), de l'espace intérieur (8) du tube de mesure sur le tube de mesure (2),
la commande (14) de mesure de débit et la commande (11) de mesure de propriétés étant reliées l'une à l'autre par une ligne de signal (18),
la commande (11) de mesure de propriétés effectue d'abord un certain nombre de mesures d'impédance avec les au moins trois électrodes (12) de mesure de propriétés sur le milieu (9) dans la première zone (13) pendant une durée de mesure d'impédance et, pendant ce temps, la durée de mesure d'impédance est signalée par un signal de mesure via la ligne de signal (18) de la commande (14) de mesure de débit, puis au moins une propriété du milieu (9) est déterminée à partir des mesures d'impédance en utilisant la tomographie à impédance, et
un champ magnétique (20) étant généré dans le milieu (9) dans la deuxième zone (17) par la commande (14) de mesure de débit avec le dispositif (15) de génération de champ magnétique, un certain nombre de mesures de tension étant effectuées à une fréquence d'échantillonnage avec les au moins deux électrodes (16) de mesure de débit sur le milieu (9) dans la deuxième zone (17), la durée de mesure de l'impédance est extraite du signal de mesure par la commande (14) de mesure de débit, les mesures de tension effectuées pendant les mesures d'impédance sont rejetées et un débit du milieu (9) est déterminé à partir des mesures de tension restantes.

2. Procédé selon la revendication 1, dans lequel des mesures de résistance sont effectuées en tant que mesures d'impédance, et l'au moins une propriété du milieu (9) est déterminée à partir des mesures d'impédance en utilisant la tomographie par résistance.

3. Procédé selon la revendication 1 ou 2, dans lequel l'au moins une propriété est une proportion et/ou une taille de composants solides dans le milieu (9).

4. Procédé selon l'une des revendications 1 à 3, dans lequel, après la détermination de l'au moins une propriété, la commande (11) de mesure de propriétés attend un certain temps avant d'effectuer le nombre suivant de mesures d'impédance.

5. Procédé selon l'une des revendications 1 à 4, dans lequel le débit du milieu (9) n'est déterminé à partir des mesures de tension restantes que si un nombre des mesures de tension restantes est d'au moins 30, de préférence de 40 et de manière particulièrement préférée, de 50.

6. Procédé selon l'une des revendications 1 à 5, dans lequel une valeur moyenne est formée à partir des mesures de tension restantes pendant et pour la détermination du débit.

7. Procédé selon la revendication 6, dans lequel le procédé est exécuté plusieurs fois et dans lequel une tendance est déterminée à partir d'un certain nombre de valeurs moyennes et, en utilisant la tendance, des lacunes dans une séquence temporelle des valeurs moyennes sont comblées.

8. Procédé selon la revendication 7, dans lequel la tendance est formée à partir d'un nombre de 3 à 7 valeurs moyennes.

9. Procédé selon la revendication 7 ou 8, dans lequel, lors de la détermination de la tendance, les variations entre les valeurs moyennes les plus récentes sont pondérées plus fortement que les variations entre les valeurs moyennes les plus anciennes.

10. Procédé selon la revendication 9, dans lequel la tendance est déterminée en déterminant d'abord une pente entre deux valeurs moyennes successives, puis une pente moyenne en déterminant une valeur moyenne d'abord à partir des deux pentes les plus anciennes, puis à partir de la valeur moyenne déterminée précédemment et de la pente suivante la plus récente.

11. Procédé selon l'une des revendications 1 à 10, dans lequel le dispositif (15) de génération de champ magnétique est conçu de façon à générer un champ magnétique continu commuté avec une première direction de champ magnétique et une deuxième direction de champ magnétique du champ magnétique (20) qui est antiparallèle à la première, et
le dispositif (15) de génération de champ magnétique est commandé par la commande (14) de mesure de débit pour générer le champ magnétique continu commuté, le nombre de mesures de tension étant effectué une fois pendant la première direction de champ magnétique et une fois pendant la deuxième direction de champ magnétique, et le débit du milieu (9) est déterminé à partir des deux nombres de mesures de tension.

12. Procédé selon la revendication 11 et l'une des revendications 6 à 10, dans lequel le nombre de valeurs moyennes est déterminé séparément pour la première direction de champ magnétique et la deuxième direction de champ magnétique.

13. Procédé selon la revendication 11 ou 12, dans lequel, lors de la commande du dispositif (15) de génération de champ magnétique, la commande (14) de mesure de débit signale un moment de commutation du champ magnétique continu commuté par un signal de commutation via la ligne de signal (18) de la commande (11) de mesure de propriétés, et
l'instant de commutation est extrait du signal de commutation par la commande (11) de mesure de propriétés et les mesures d'impédance sont commencées à l'instant de commutation.

14. Système de mesure (1) comprenant un tube de mesure (2), un revêtement (3), un appareil (5) de mesure de propriétés et un appareil (6) de mesure du débit,
le tube de mesure (2) présentant un espace intérieur (8) de tube de mesure le long d'un axe longitudinal (7) de tube de mesure,
l'espace intérieur (8) du tube de mesure étant revêtu du revêtement (3) et le revêtement (3) isolant électriquement le tube de mesure (2) par rapport à un milieu (9) présent dans l'espace intérieur (8) du tube de mesure et le protégeant contre l'usure due au milieu (9),
l'appareil (5) de mesure de propriétés présentant une commande (11) de mesure de propriétés et au moins trois électrodes (12) de mesure de propriétés et les au moins trois électrodes (12) de mesure de propriétés étant agencées dans une première zone (13) de l'espace intérieur (8) du tube de mesure (2),
la commande (11) de mesure de propriétés étant conçue pour effectuer d'abord un certain nombre de mesures d'impédance avec les au moins trois électrodes (12) de mesure de propriétés sur le milieu (9) dans la première zone (13) pendant une durée de mesure d'impédance, puis pour déterminer au moins une propriété du milieu (9) à partir des mesures d'impédance en utilisant la tomographie à impédance,
l'appareil (6) de mesure du débit présentant une commande (14) de mesure de débit, un dispositif (15) de génération de champ magnétique et au moins deux électrodes (16) de mesure de débit et le dispositif (15) de génération de champ magnétique et les au moins deux électrodes (16) de mesure de débit étant agencés sur le tube de mesure (2) dans une deuxième zone (17), différente de la première zone (13), de l'espace intérieur (8) du tube de mesure et
la commande (14) de mesure de débit étant conçue pour générer, avec le dispositif (15) de génération de champ magnétique, un champ magnétique (20) dans le milieu (9) dans la deuxième zone (17), pour effectuer un certain nombre de mesures de tension à une fréquence d'échantillonnage avec les au moins deux électrodes (16) de mesure de débit sur le milieu (9) dans la deuxième zone (17) et pour déterminer un débit du milieu (9) à partir des mesures de tension,
**caractérisé**
**en ce que** le système de mesure (1) présente un blindage et une ligne de signal (18),
**en ce que** le blindage protège l'espace intérieur du tube de mesure (8) contre les perturbations externes,
**en ce que** la commande (14) de mesure de débit et la commande (11) de mesure de propriétés sont reliées l'une à l'autre par la ligne de signal (18),
**en ce que** la commande (11) de mesure de propriétés est conçue pour signaler, pendant les mesures d'impédance, la durée de mesure de l'impédance à la commande (14) de mesure de débit par un signal de mesure via la ligne de signal (18), et
**en ce que** la commande (14) de mesure de débit est conçue pour extraire du signal de mesure la durée de mesure d'impédance, pour rejeter les mesures de tension effectuées pendant les mesures d'impédance et pour déterminer le débit du milieu (9) à partir des mesures de tension restantes.

15. Système de mesure (1) selon la revendication 14, **caractérisé en ce que** la commande (11) de mesure de propriétés et la commande (14) de mesure de débit sont conçues de telle sorte qu'un temps de retard du signal de mesure est inférieur à une durée de période de la fréquence d'échantillonnage.

16. Système de mesure (1) comprenant un tube de mesure (2), un revêtement (3), un appareil (5) de mesure de propriétés et un appareil (6) de mesure du débit,
le tube de mesure (2) présentant un espace intérieur (8) de tube de mesure le long d'un axe longitudinal (7) de tube de mesure,
l'espace intérieur (8) du tube de mesure étant revêtu du revêtement (3) et le revêtement (3) isolant électriquement le tube de mesure (2) d'un milieu (9) présent dans l'espace intérieur (8) du tube de mesure et le protégeant contre l'usure due au milieu (9),
l'appareil (5) de mesure de propriétés présentant une commande (11) de mesure de propriétés et au moins trois électrodes (12) de mesure de propriétés et les au moins trois électrodes (12) de mesure de propriétés étant agencées dans une première zone (13) de l'espace intérieur (8) du tube de mesure (2),
la commande (11) de mesure de propriétés étant conçue pour effectuer d'abord un certain nombre de mesures d'impédance au moyen des au moins trois électrodes (12) de mesure de propriétés sur le milieu (9) dans la première zone (13) pendant une durée de mesure d'impédance, puis pour déterminer au moins une propriété du milieu (9) à partir des mesures d'impédance en utilisant la tomographie à impédance,
l'appareil (6) de mesure du débit présentant une commande (14) de mesure de débit, un dispositif (15) de génération de champ magnétique et au moins deux électrodes (16) de mesure de débit et le dispositif (15) de génération de champ magnétique et les au moins deux électrodes (16) de mesure de débit étant agencés sur le tube de mesure (2) dans une deuxième zone (17), différente de la première zone (13), de l'espace intérieur (8) du tube de mesure et
la commande (14) de mesure de débit étant conçue pour générer, avec le dispositif (15) de génération de champ magnétique, un champ magnétique (20) dans le milieu (9) dans la deuxième zone (17), de façon à effectuer un certain nombre de mesures de tension à une fréquence d'échantillonnage avec les au moins deux électrodes (16) de mesure de débit sur le milieu (9) dans la deuxième zone (17) et à déterminer un débit du milieu (9) à partir des mesures de tension,
**caractérisé**
**en ce que** le système de mesure (1) présente un blindage, une ligne de signal (18) et une horloge (21),
**en ce que** le blindage protège l'intérieur du tube de mesure (8) contre les perturbations externes,
**en ce que** la commande (14) de mesure de débit et la commande (11) de mesure de propriétés sont reliées d'une part l'une à l'autre et d'autre part chacune à l'horloge (21) par l'intermédiaire de la ligne de signal (18),
**en ce que** l'horloge (21) est conçue de façon à générer une mesure de temps avec une période de mesure de temps, en ce que la commande (14) de mesure de débit et la commande (11) de mesure de propriétés sont conçues pour effectuer les mesures d'impédance et les mesures de tension à des moments différents les uns des autres en fonction de la mesure de temps,
**en ce que** la commande (11) de mesure de propriétés présente une phase d'initialisation et est conçue pour signaler une fin de la phase d'initialisation par un premier signal de fin via la ligne de signal (18) de la commande (14) de mesure de débit,
**en ce que** la commande (14) de mesure de débit présente une phase d'initialisation et est conçue pour signaler une fin de la phase d'initialisation par un deuxième signal de fin via la ligne de signal (18) de la commande (11) de mesure de propriétés,
**en ce que** la commande (11) de mesure de propriétés est conçue pour commencer à effectuer les mesures d'impédance, déclenchées par la réception du deuxième signal de fin, et
**en ce que** la commande (14) de mesure de débit est conçue pour commencer à générer le champ magnétique (20), déclenché par la réception du premier signal de fin.

17. Le système de mesure (1) selon la revendication 16, **caractérisé**
**en ce qu'**une durée d'exécution des mesures d'impédance et de détermination d'au moins une propriété du milieu (9) forme un cycle de mesure de propriétés,
**en ce qu'**une durée de génération du champ magnétique (20), de réalisation des mesures de tension et de détermination du débit du milieu (9) forment un cycle de mesure de débit, et
**en ce que** le cycle de mesure de propriétés et le cycle de mesure du débit sont chacun un multiple entier de la période de mesure de temps.

18. Système de mesure (1) selon la revendication 17, **caractérisé en ce que** le multiple entier est égal à 2ⁿ, n étant un nombre entier positif.

19. Système de mesure (1) selon l'une des revendications 15 à 18, **caractérisé en ce que** le système de mesure (1) présente un potentiel de masse (4) et **en ce que** le blindage est réalisé par le fait que le tube de mesure (2) présente une liaison avec le potentiel de masse (4) à chacune des deux extrémités de l'espace intérieur (8) du tube de mesure.

20. Système de mesure (1) selon l'une des revendications 15 à 19, **caractérisé en ce que** la ligne de signal (18) présente une isolation galvanique (19).

21. Système de mesure (1) selon l'une des revendications 15 à 20, **caractérisé en ce que** le système de mesure (1) est conçu pour mettre en œuvre un procédé selon l'une des revendications 2 à 14.
